# EUROPEAN PATENT SPECIFICATION

(11) **EP 3 100 840 B1**
(45) Date of publication and mention of the grant of the patent: **26.09.2018**
(21) Application number: 16170827.6
(22) Date of filing: 23.05.2016
(51) Int. Cl.: B29C 45/76, B29C 45/78, B29C 45/60

(54) **INJECTION MOLDING MACHINE**
SPRITZGIESSMASCHINE
MACHINE DE MOULAGE À INJECTION

(30) Priority: 01.06.2015 JP 2015111693
(43) Date of publication of application: 07.12.2016
(73) Proprietor: SUMITOMO HEAVY INDUSTRIES, LTD., Tokyo 141-6025 (JP)
(72) Inventor: SEIKE, Kouji, Kanagawa 237-8555 (JP); ISHIDA, Hironobu, Kanagawa 237-8555 (JP)
(74) Representative: Louis Pöhlau Lohrentz

(56) References cited:
- EP-A1- 1 658 949
- DE-A1-102006 032 984
- DE-A1-102010 024 267
- US-A- 4 908 169
- US-A1- 2007 001 332

## Description

### BACKGROUND OF THE INVENTION

### Field of the Invention

The present invention relates to an injection molding machine.

### Description of Related Art

Inject ion molding machines have an injection unit that fills a cavity space of a mold unit with a molding material. The injection unit has a cylinder that heats the molding material, and a screw that is rotatably disposed within the cylinder. The screw has a rotating shaft, and a spiral flight that protrudes from an outer periphery of the rotating shaft. A spiral groove is formed by the flight, and the molding material is supplied to an upstream part of the groove. The injection unit feeds the molding material from an upstream side to a downstream side along the groove by rotating the rotating shaft. The molding material is gradually melted by the heat from the cylinder while being fed to the downstream side. Since flowing of unmelted molding material to the downstream side is suppressed, a subflight may be formed in the screw (for example, Japanese Unexamined Patent Application Publication No. 2000-185342) . United States Patent US 4 908 169 discloses a method for plasticating molding material using a reciprocating-screw having a melt channel and solids channels.

In the related art, a molten state of the molding material is unknown.

### SUMMARY OF THE INVENTION

The invention has been made in view of the above problems, and a main object thereof is to provide an injection molding machine in which a molten state of a molding material can be ascertained.

In order to solve the above problems, according to an aspect of the invention, there is provided an injection molding machine including an injection unit including a cylinder that heats a molding material, and a screw rotatably disposed within the cylinder; and a monitoring unit that monitors the temperature of the injection unit. The screw includes a rotating shaft, a first spiral flight that protrudes from an outer periphery of the rotating shaft, and a second spiral flight that partitions a groove formed by the first flight. The height of the second flight is lower than the height of the first flight. The monitoring unit monitors the temperature of the second flight and/or its vicinity during the rotation of the screw, and determines a molten state of the molding material on the basis of monitoring results.

According to the aspect of the invention, an injection molding machine in which the molten state of a molding material can be ascertained is provided.

### BRIEF DESCRIPTION OF THE DRAWINGS

FIG. 1 is a view illustrating an injection molding machine according to an embodiment.
FIG. 2 is an enlarged view illustrating a portion of an injection unit according to the embodiment.
FIG. 3 is a view illustrating the temperature distribution of the injection unit according to the embodiment, and a view illustrating an axial temperature distribution in the vicinity of an inner wall in a cylinder.

### DETAILED DESCRIPTION OF THE INVENTION

An embodiment for realizing the invention will be described below with reference to the drawings, the same or corresponding components being designated by the same or corresponding reference signs, and the description thereof being omitted.

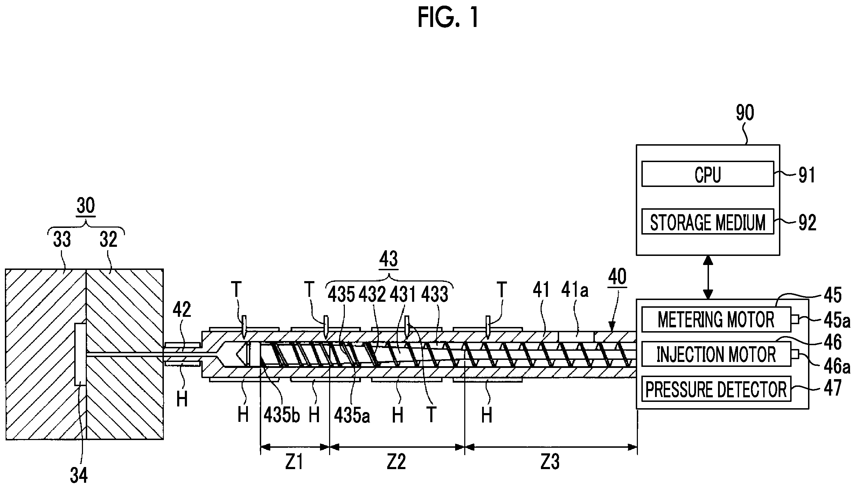

FIG. 1 is a view illustrating an injection molding machine according to an embodiment. An injection molding machine has an injection unit 40 and a controller 90.

The injection unit 40 is made to be movable forward and backward with respect to a mold unit 30. The injection unit 40 is touched on the mold unit 30, and fills a cavity space 34 of the mold unit 30 with a molding material. The mold unit 30 is constituted of a stationary mold 32 and a movable mold 33. By moving the movable mold 33 forward and backward with respect to the stationary mold 32, mold closing, mold clamping, and mold opening of the mold unit 30 are performed. The cavity space 34 is formed between the stationary mold 32 and the movable mold 33 in a mold clamped state. A molding product is obtained by the molding material filled within the cavity space 34 being hardened. Thereafter, mold opening of the mold unit 30 is performed and the molding product is pushed out from the mold unit 30.

The injection unit 40 has, for example, a cylinder 41, a nozzle 42, a screw 43, a plasticizing motor 45, an injection motor 46, and a pressure detector 47. Hereinafter, a description will be made with a movement direction (leftward direction in FIG. 1) of the screw 43 during filling being as the front, and a movement direction (rightward direction of FIG. 1) of the screw 43 during plasticizing being as the rear.

The cylinder 41 heats the molding material supplied from a supply port 41a. The supply port 41a is formed at a rear part of the cylinder 41.

A heating source H, such as a heater, is provided at an outer periphery of the cylinder 41. A plurality of the heating sources H are provided in an axial direction of the cylinder 41. The controller 90 independently controls the plurality of heating sources H so that a temperature distribution in the axial direction of the cylinder 41 becomes a set temperature distribution.

The temperature of the cylinder 41 is measured by a thermometer T, such as a thermocouple. A plurality of the thermometers T are provided in the axial direction of the cylinder 41, and output each measurement temperature to the controller 90. The controller 90 controls the heating sources H so that the deviations between the measurement temperature and a set temperature become zero.

The nozzle 42 is provided at a front end of the cylinder 41, and is pressed against the mold unit 30.

The screw 43 is disposed within the cylinder 41 so as to be rotatable and movable forward and backward. The screw 43 will be described below in detail.

The plasticizing motor 45 rotates the screw 43, thereby feeding the molding material forward along a spiral groove of the screw 43. The molding material is gradually melted by the heat from the cylinder 41 while being fed forward. When a liquid molding material is fed to the front of the screw 43 and accumulated at a front part of the cylinder 41, the screw 43 is moved backward.

The injection motor 46 moves the screw 43 forward and backward. The injection motor 46 moves the screw 43 forward, thereby filling the cavity space 34 of the mold unit 30 with the liquid molding material accumulated in front of the screw 43. Thereafter, the injection motor 46 pushes the screw 43 forward, and applies a pressure to the molding material within the cavity space 34. An insufficient molding material can be replenished. A motion conversion mechanism that converts the rotational motion of the injection motor 46 into a linear motion of the screw 43 is provided between the injection motor 46 and the screw 43.

The pressure detector 47 is disposed, for example, between the injection motor 46 and the screw 43, and detects a pressure that the screw 43 receives from the molding material, a back pressure to the screw 43, and the like. The pressure that the screw 43 receives from the molding material is equivalent to a pressure acting on the molding material from the screw 43.

The controller 90 has a central processing unit (CPU) 91, and a storage medium 92, such as a memory. The controller 90 makes the CPU 91 execute a program stored in the storage medium 92, thereby controlling the injection unit 40 and the like. The controller 90 corresponds to a monitoring unit set forth in the claims. In addition, the monitoring unit may be provided separately from the controller 90.

The controller 90 performs a molding operation of performing a series of steps, such as a filling step, a holding pressure step, and a cooling step, thereby manufacturing a molding product. The controller 90 performs a cycle operation of repeating the series of steps, thereby repeatedly manufacturing a molding product. A plasticizing step may be performed during the cooling step for shortening of a molding cycle.

In the filling step, the injection motor 46 is driven to move the screw 43 forward at a setting speed, and the inside of the mold unit 30 is filled with the liquid molding material accumulated in front of the screw 43. The position and the speed of the screw 43 are detected by, for example, an encoder 46a of the injection motor 46. If the position of the screw 43 reaches a predetermined position, switching (so-called V/P switching) from the filling step to the holding pressure step is performed.

In addition, after the position of the screw 43 reaches the predetermined position in a filling step, the screw 43 may be stopped at the predetermined position, and then, the V/P switching may be performed. Immediately before the V/P switching, the slow-speed forward movement or the slow-speed backward movement of the screw 43 may be performed instead of the stop of the screw 43.

In the holding pressure step, the injection motor 46 is driven to push the screw 43 forward with a setting pressure, and a pressure is applied to the molding material within the mold unit 30. An insufficient molding material can be replenished. The pressure of the molding material is detected by, for example, the pressure detector 47. A cooling step is started after the holding pressure step. In the cooling step, hardening of the molding material within the cavity space 34 is performed. The plasticizing step may be performed during the cooling step.

In the plasticizing step, the plasticizing motor 45 is driven to rotate the screw 43 at a set number of rotations, and feeds the molding material forward along the spiral groove of the screw 43. The molding material is gradually melted with this feeding. When the liquid molding material is fed to the front of the screw 43 and accumulated at the front part of the cylinder 41, the screw 43 is moved backward. The number of rotations of the screw 43 is detected by, for example, an encoder 45a of the plasticizing motor 45.

In the plasticizing step, the injection motor 46 is driven to apply a set back pressure to the screw 43 in order to limit a sudden backward movement of the screw 43. The set back pressure to the screw 43 is detected by, for example, the pressure detector 47. The plasticizing step is completed if the screw 43 moves backward to a predetermined position and a predetermined amount of the molding material is accumulated in front of the screw 43.

In addition, although the injection unit 40 of the present embodiment is of an in-line screw type, the injection unit may be of a preplasticization type or the like. The preplasticization type injection unit supplies a molding material melted within a plasticizing cylinder to an injection cylinder, and injects the molding material into the mold unit from the injection cylinder. The screw is disposed inside the plasticizing cylinder so as to be rotatable or rotatable and movable forward and backward, and a plunger is disposed within the injection cylinder so as to be movable forward and backward. In this case, the plasticizing cylinder corresponds to a cylinder set forth in the claims.

Meanwhile, the screw 43 has a rotating shaft 431, and a spiral flight 432 that protrudes from an outer periphery of the rotating shaft 431. A spiral groove 433 is formed by the flight 432, and the molding material is fed from an upstream side (a right side in the drawing) to a downstream side (a left side in the drawing) along the groove 433. The flight 432 corresponds to a first flight set forth in the claims.

The screw 43 has a first section Z1, a second section Z2, and a third section Z3 in this order from the upstream side toward the downstream side. The first section Z1 is a section where the solid phase of the molding material is present. The second section Z2 is a section where both of a solid phase and a liquid phase of the molding material are present. The third section Z3 is a section where the liquid phase of the molding material is present.

The groove 433 is deep in the first section Z1, is shallow in the third section Z3, and is shallower from the upstream side to the downstream side in the second section Z2. In this case, the first section Z1 is also referred to as a feeding zone, the second section Z2 is also referred to as a compression zone, and the third section Z3 are also referred to as a metering zone.

In addition, the depth of the groove 433 may be constant.

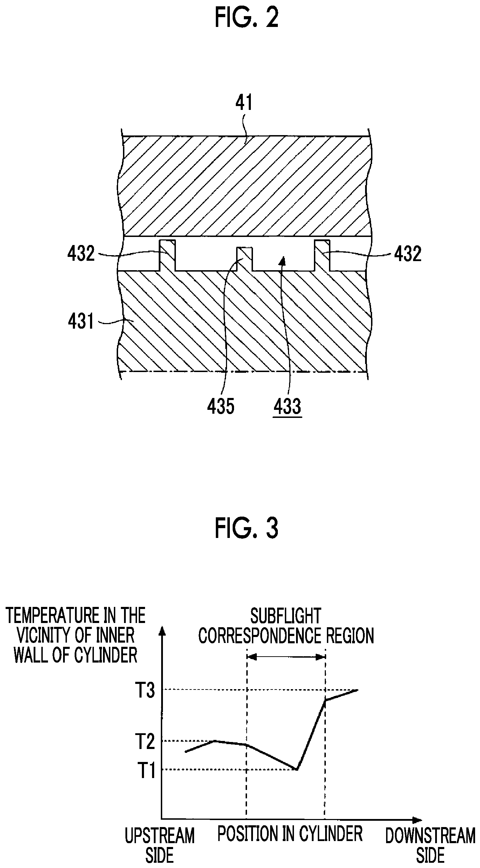

FIG. 2 is an enlarged view illustrating a portion of the injection unit according to the embodiment. In FIG. 2, a one-dot chain line represents a centerline of the screw 43. The screw 43, as illustrated in FIG. 2 and the like, further has a spiral subflight 435 that protrudes from the outer periphery of the rotating shaft 431. The subflight 435 corresponds to a second flight set forth in the claims.

The subflight 435 partitions the groove 433 formed by the flight 432. The height of the subflight 435 is lower than the height of flight 432. That is, a gap between the subflight 435 and the cylinder 41 is greater than a gap between the flight 432 and the cylinder 41.

During the rotation of the screw 43, the subflight 435 crushes a unmelted molding material and generates shear heat, thereby suppressing that the unmelted molding material flows to the downstream side. The unmelted molding material is melded with the heat from the cylinder 41 other than the shear heat.

An upstream end 435a (hereinafter referred to as "a subflight upstream end 435a") of the subflight 435 maybe disposed in the second section Z2 where the molding material in both of the solid phase and the liquid phase is present, for example, as illustrated in FIG. 1.
In addition, the subflight upstream end 435a may be disposed in the first section Z1 or the third section Z3.

Meanwhile, a downstream end 435b (hereinafter referred to as a "subflight downstream end 435b") of the subflight 435 may be disposed in the third section Z3 where the molding material in the liquid phase is present, for example, as illustrated in FIG. 1. In addition, the subflight downstream end 435b may be disposed in the second section Z2 as long as this subflight downstream end is disposed closer to the downstream side than the subflight upstream end 435a.

The pitch of the subflight 435 may be greater than the pitch of the flight 432. The subflight 435 may be continuously connected to the flight 432 at both of the upstream end 435a and the downstream end 435b thereof.

In addition, the pitch of the subflight 435 may be smaller than or the same as the pitch of the flight 432. Additionally, although the pitch of the subflight 435 is constant, this pitch may vary. Similarly, although the pitch of the flight 432 is constant, this pitch may vary.

Although the flight width of the subflight 435 is the same as the flight width of the flight 432, the flight width of the subflight 435 may be smaller or may be greater. Additionally, although the flight width of the subflight 435 is constant, this flight width may vary. Similarly, although the flight width of the flight 432 is constant, this flight width may vary.

FIG. 3 is a view illustrating the temperature distribution of the injection unit according to the embodiment, and a view illustrating an axial temperature distribution in the vicinity of an inner wall of the cylinder. In FIG. 3, a subflight correspondence region is a region having the same axial position as the subflight downstream end 435b at the time of the start of plasticizing as a downstream end, and having the same axial position as that of the subflight upstream end 435a at the time of the end of the plasticizing as an upstream end. In FIG. 3, the subflight correspondence region corresponds to a "section where the second flight is formed" set forth in the claims. Additionally, in FIG. 3, a region on the upstream side of the subflight correspondence region and a region on the downstream side of the subflight correspondence region correspond to "a section where the second flight is not formed" set forth in the claims. In FIG. 3, a temperature in the vicinity of the inner wall of the cylinder 41 is an average value of temperatures from the start of the plasticizing to the end of the plasticizing.

If the subflight 435 crushes a unmelted granular molding material during the rotation of the screw 43, a low-temperature portion inside grains appear to the outside, and takes heat from the cylinder 41. Therefore, in the subflight correspondence region, the temperature in the vicinity of the inner wall of the cylinder 41 drops as the proportion of the solid phase occupied in the overall molding material becomes higher. As a result, in at least a portion of the subflight correspondence region, the temperature in the vicinity of the inner wall of the cylinder 41 may become lower than that in an upstream region in the vicinity of the portion.

Therefore, the controller 90 monitors the temperature of the subflight 435 and/or its vicinity during the rotation of the screw 43. For example, the controller 90 may monitor the temperature of the cylinder 41 in the vicinity of the subflight 435 during the rotation of the screw 43. Since the cylinder 41 does not rotate during the rotation of the screw 43, the monitoring of the temperature thereof is easy. In addition, the controller 90 may monitor the temperature of the subflight 435 itself during the rotation of the screw 43.

The controller 90 monitors the temperature of the subflight correspondence region. The controller 90 may compare the temperature of the subflight correspondence region with the temperature of the region on the upstream side of the subflight correspondence region. Additionally, the controller 90 may compare the temperature of the subflight correspondence region with the temperature of the region on the downstream side of the subflight correspondence region.

The controller 90 determines the molten state of the molding material on the basis of the monitoring results. Criteria for determination include, for example, criteria for determination of the following (1) to (3) . These criteria for determination may be independently used, or may be used in combination. The combination is arbitrary.

A criterion for determination of (1) is whether or not a minimum temperature T1 in the subflight correspondence region is equal to or higher than more than a threshold value T0. In a case where the above minimum temperature T1 is lower than the threshold value T0, a temperature drop of the molding material by the subflight 435 is too intense, and the unmelted molding material in the subflight correspondence region is too much. Therefore, there is a concern that portion of the unmelted molding material may be injected from the injection unit 40. Hence, in a case where the above minimum temperature T1 is lower than the threshold value T0, it is determined that the molten state of the molding material is bad. On the other hand, in a case where the above minimum temperature T1 is equal to or higher than the threshold value T0, it is determined that the unmelted molding material is sufficiently little in the subflight correspondence region, and the molten state of the molding material is good.

A criterion for determination of (2) is whether or not a temperature difference ΔT (ΔT = T2 - T1) obtained by subtracting the above minimum temperature T1 from a maximum temperature T2 on the upstream side of a measurement position of the above minimum temperature T1 is lower than a threshold value ΔT0 (ΔT0 > 0) . In a case where the above temperature difference ΔT is equal to or higher than the threshold value ΔT0, a temperature drop of the molding material by the subflight 435 is too intense, and the unmelted molding material in the subflight correspondence region is too much. Therefore, there is a concern that portion of the unmelted molding material maybe injected from the injection unit 40. Hence, in a case where the above temperature difference ΔT is equal to or higher than the threshold value ΔT0, it is determined that the molten state of the molding material is bad. On the other hand, in a case where the above temperature difference ΔT is lower than the threshold value ΔT0, it is determined that the unmelted molding material is sufficiently little in the subflight correspondence region, and the molten state of the molding material is good.

A criterion for determination of (3) is whether or not a temperature difference ΔT' (ΔT' = T3 - T1) obtained by subtracting the above minimum temperature T1 from a maximum temperature T3 on the downstream side of the measurement position of the above minimum temperature T1 is lower than a threshold value ΔT0' (ΔT0' > 0) . In a case where the above temperature difference ΔT' is equal to or higher than the threshold value ΔT0', a temperature drop of the molding material by the subflight 435 is too intense, and the unmelted molding material in the subflight correspondence region is too much. Therefore, there is a concern that a portion of the unmelted molding material maybe injected from the injection unit 40. Hence, in a case where the above temperature difference ΔT' is equal to or higher than the threshold value ΔT0', it is determined that the molten state of the molding material is bad. On the other hand, in a case where the above temperature difference ΔT' is lower than the threshold value ΔT0', it is determined that the unmelted molding material is sufficiently little in the subflight correspondence region, and the molten state of the molding material is good.

In addition, in the criteria for determination of the above (1) to (3), the temperature of a specific position may be used insteadof the minimum temperature T1. Additionally, in the above criterion for determination of (2), the temperature of a specific position may be used instead of the maximum temperature T2. Additionally, in the above criterion for determination of (3), the temperature of a specific position may be used instead of the maximum temperature T3.

In order to determine the molten state of the molding material, the controller 90 may monitor the temperature in the vicinity of the inner wall of the cylinder 41, or may monitor the temperature of a position deeper than a measurement position (hereinafter also referred to as a "measurement position for control") of the temperature used for the control of the heating sources H. In addition, the measurement position of the temperature in the vicinity of the inner wall of the cylinder 41 that the controller 90 monitors may be a position with the same depth as the measurement position for control, or may be a position shallower than the measurement position for control. Since a temperature drop of the molding material by the subflight 435 appears markedly in the vicinity of the inner wall of the cylinder 41, determination precision is improved.

In order to determine the molten state of the molding material, the controller 90 may monitor the temperature of a cylinder 41, using thermometers more than the thermometers used for the control of the heating sources H. The temperature distribution of the cylinder 41 in the axial direction can be precisely monitored.

The controller 90 may perform monitoring during the rotation of the screw 43 in the molding operation, and determine the molten state of the molding material on the basis of the monitoring results. The yield of a molding product can be improved by performing monitoring during the rotation of the screw 43 in the molding operation.

Meanwhile, a purge operation is performed at the time of warming-up, at the time of replacement of the molding material, and the like. The purge operation is performed in a state where the injection unit 40 is separated from the mold unit 30, and includes an operation corresponding to the plasticizing step and an operation corresponding to the filling step. In the operation corresponding to the plasticizing step, the molding material is accumulated in front of the screw 43 by rotating the screw 43 at a set number of rotations. The screw 43 is moved backward along with this. In this case, an opening and closing mechanism (not illustrated) may block the nozzle 42. Meanwhile, in the operation corresponding to the filling step, the liquid molding material accumulated in front of the screw 43 is injected from the cylinder 41 by moving the screw 43 forward at a setting speed. In this case, the opening and closing mechanism opens the nozzle 42.

In addition, the purge operation may also include only the operation of rotating the screw 43 at a set number of rotations, and for example, may include only the operation of rotating the screw 43 at a set number of rotations in a predetermined position. Through the rotation of the screw 43, the molding material is fed to the front of the screw 43, and is injected from the cylinder 41.

Hence, the controller 90 may perform monitoring during the rotation of the screw 43 in the purge operation, and determine the molten state of the molding material on the basis of the monitoring results. By performing the monitoring during the rotation of the screw 43 in the purge operation, settings of molding conditions are possible before the start of the molding operation.

The controller 90 may acquire the temperature of the subflight 435 and/or its vicinity during the rotation of the screw 43 in the purge operation as data used for drawing-up of the criteria for determination of the molten state of the molding material. The controller 90 matches the acquired temperature with the molten state of the molding material, and stores the matching results in the storage medium 92. The molten state of the molding material can be determined by visual inspection, inspection of quality, and the like after solidification of the molding material. The results may be stored in the controller 90 via an operating unit or the like that receives an input operation performed by a user. The controller 90 may change the molding conditions, such as the set number of rotations of the screw 43, and the set temperature of the cylinder 41, and the like, thereby acquire a lot of data. The controller 90 obtains, for example, the threshold value T0 of the criterion for determination of the above (1), the threshold value ΔT0 of the criterion for determination of the above (2), and the threshold value ΔT0' of the criterion for determination of the above (3) . Hence, the criteria for determination can be drawn up during the purge operation, and the criteria for determination can be drawn up before the molding operation. Using the drawn-up criteria for determination, the controller 90 may determine the molten state of the molding material in another purge operation, or may determine the molten state of the molding material in the molding operation. In addition, although the controller 90 takes above data by performing the purge operation, the above data may be taken by performing the molding operation in a tentative way.

The controller 90 may output an alarm on the basis of results of determination of the molten state of the molding material. An alarm is output in a case where the molten state of the molding material is bad, and an alarm is not output in a case where the molten state of the molding material is good. The output of an alarm may be performed by the display of an image, the output of sound, and the like.

The controller 90 may change the settings of the molding conditions on the basis of the results of determination of the molten state of the moldingmaterial. For example, the controller 90 may change at least one of the set number of rotations of the screw 43 and the set temperature of the cylinder 41 on the basis of the results of determination of the molten state of the molding material.

In a case where the molten state of the molding material is bad, the set number of rotations of the screw 43 may be changed in its decreasing direction. Since a speed at which the molding material is fed forward becomes low and the heating time of the molding material becomes long, the molten state of the molding material is improved. Additionally, in a case where the molten state of the molding material is bad, the set temperature of the cylinder 41 may be changed in its increasing direction. Even in this case, the molten state of the molding material is naturally improved.

Meanwhile, in a case where the molten state of the molding material is good, the settings of the molding conditions does not need to be changed, but may be changed. In a case where the molten state of the molding material is good, the set number of rotations of the screw 43 may be changed in its increasing direction within a favorable range. The molding cycle can be shortened. Additionally, in a case where the molten state of the molding material is good, the set temperature of the cylinder 41 may be changed in its decreasing direction within a favorable range. The load on the heating sources H can be reduced.

The set number of rotations of the screw 43 may be set to be as large as possible in a range where the molten state of the molding material is good. The set number of rotations of the screw 43 is determined taking the time of the cooling step, and the like into consideration.

Additionally, the set temperature of the cylinder 41 may be set to be as small as possible in a range where the molten state of the molding material is good. The set temperature of the cylinder 41 is determined taking the set number of rotations of the screw 43, and the like, into consideration.

Although the embodiment of the injection unit has been described above, the invention is not limited to the above-described embodiment, and various alterations and improvements can be made within the concept of the invention described in the claims.

For example, although the controller 90 of the above embodiment determines the molten state of the molding material in two steps of good and bad, the molten state may be determined in multiple steps of three or more steps. In this case, the criteria for determination may also be drawn up in multiple steps . Additionally, in this case, the controller 90 may change the settings of molding conditions with a change width according to steps.

## Claims

1. An injection molding machine comprising:
an injection unit (40) including a cylinder (41) that heats a molding material, and a screw (43) rotatably disposed within the cylinder (41); and
a monitoring unit (90) that monitors the temperature of the injection unit (40),
wherein the screw (43) includes
a rotating shaft,
a first spiral flight (432) that protrudes from an outer periphery of the rotating shaft, and
a second spiral flight (435) that partitions a groove formed by the first flight (432),
wherein the height of the second flight (435) is lower than the height of the first flight (432), and
**characterized in that** the monitoring unit (90) is adapted to monitor the temperature of the second flight (435) and/or its vicinity during the rotation of the screw (43), and to determine a molten state of the molding material on the basis of monitoring results.

2. The injection molding machine according to Claim 1,
wherein the monitoring unit (90) is adapted to monitor the temperature of the cylinder (41) in the vicinity of the second flight (435) during the rotation of the screw (43), and to determine the molten state of the molding material on the basis of the monitoring results.

3. The injection molding machine according to Claim 1 or 2,
wherein the monitoring unit (90) is adapted to monitor a temperature in the vicinity of an inner wall of the cylinder (41) in the vicinity of the second flight (435) during the rotation of the screw (43), and to determine the molten state of the molding material on the basis of the monitoring results.

4. The injection molding machine according to any one of Claims 1 to 3,
wherein the monitoring unit (90) is adapted to monitor the temperature of a section where the second flight (435) is formed, and to determine the molten state of the molding material on the basis of the monitoring results.

5. The injection molding machine according to any one of Claims 1 to 4,
wherein the monitoring unit (90) is adapted to compare the temperature of a section where the second flight (435) is formed, with the temperature of a section where the second flight (435) is not formed, thereby determining the molten state of the molding material.

6. The injection molding machine according to any one of Claims 1 to 5,
wherein the monitoring unit (90) is adapted to output an alarm on the basis of results of determination of the molten state.

7. The injection molding machine according to any one of Claims 1 to 6,
wherein the monitoring unit (90) is adapted to change settings of molding conditions on the basis of results of determination of the molten state.

## Patentansprüche

1. Spritzgießmaschine, die Folgendes umfasst:
eine Einspritzeinheit (40), die einen Zylinder (41), der eine Gießmasse erwärmt, und eine Schnecke (43), die innerhalb des Zylinders (41) drehbar angeordnet ist, enthält; und
eine Überwachungseinheit (90), die die Temperatur der Einspritzeinheit (40) überwacht,
wobei die Schnecke (43) Folgendes enthält:
eine sich drehende Welle,
einen ersten Schraubengang (432), der von einem Außenumfang der sich drehenden Welle vorsteht, und
einen zweiten Schraubengang (435), der eine Rille unterteilt, die durch den ersten Gang (432) gebildet wird,
wobei die Höhe des zweiten Gangs (435) niedriger als die Höhe des ersten Gangs (432) ist, und
**dadurch gekennzeichnet, dass** die Überwachungseinheit (90) ausgelegt ist, die Temperatur des zweiten Gangs (435) und/oder seiner Umgebung während der Drehung der Schnecke (43) zu überwachen und auf der Grundlage der Überwachungsergebnisse einen geschmolzenen Zustand der Gießmasse zu bestimmen.

2. Spritzgießmaschine nach Anspruch 1,
wobei die Überwachungseinheit (90) ausgelegt ist, die Temperatur des Zylinders (41) in der Umgebung des zweiten Gangs (435) während der Drehung der Schnecke (43) zu überwachen und auf der Grundlage der Überwachungsergebnisse den geschmolzenen Zustand der Gießmasse zu bestimmen.

3. Spritzgießmaschine nach Anspruch 1 oder 2,
wobei die Überwachungseinheit (90) ausgelegt ist, eine Temperatur in der Umgebung einer Innenwand des Zylinders (41) in der Umgebung des zweiten Gangs (435) während der Drehung der Schnecke (43) zu überwachen und auf der Grundlage der Überwachungsergebnisse den geschmolzenen Zustand der Gießmasse zu bestimmen.

4. Spritzgießmaschine nach einem der Ansprüche 1 bis 3,
wobei die Überwachungseinheit (90) ausgelegt ist, die Temperatur eines Abschnitts, in dem der zweite Gang (435) gebildet ist, zu überwachen, und auf der Grundlage der Überwachungsergebnisse den geschmolzenen Zustand der Gießmasse zu bestimmen.

5. Spritzgießmaschine nach einem der Ansprüche 1 bis 4,
wobei die Überwachungseinheit (90) ausgelegt ist, die Temperatur eines Abschnitts, in dem der zweite Gang (435) gebildet ist, mit der Temperatur eines Abschnitts, in dem der zweite Gang (435) nicht gebildet ist, zu vergleichen, wodurch der geschmolzene Zustand der Gießmasse bestimmt wird.

6. Spritzgießmaschine nach einem der Ansprüche 1 bis 5,
wobei die Überwachungseinheit (90) ausgelegt ist, auf der Grundlage der Ergebnisse der Bestimmung des geschmolzenen Zustands einen Alarm auszugeben.

7. Spritzgießmaschine nach einem der Ansprüche 1 bis 6,
wobei die Überwachungseinheit (90) ausgelegt ist, auf der Grundlage der Ergebnisse der Bestimmung des geschmolzenen Zustands Einstellungen der Spritzgießbedingungen zu ändern.

## Revendications

1. Machine de moulage par injection comprenant :
une unité d'injection (40) incluant un cylindre (41) qui chauffe un matériau de moulage, et une vis (43) disposée de manière rotative à l'intérieur du cylindre (41) ; et
une unité de surveillance (90) qui surveille la température de l'unité d'injection (40) ;
dans laquelle la vis (43) inclut :
un arbre rotatif ;
un premier filet en spirale (432) qui fait saillie à partir d'une périphérie extérieure de l'arbre rotatif ; et
un second filet en spirale (435) qui sépare une rainure formée par le premier filet (432) ;
dans laquelle la hauteur du second filet (435) est inférieure à la hauteur du premier filet (432) ; et
**caractérisée en ce que** l'unité de surveillance (90) est apte à surveiller la température du second filet (435) et/ou de son voisinage pendant la rotation de la vis (43), et à déterminer un état fondu du matériau de moulage sur la base de résultats de surveillance.

2. Machine de moulage par injection selon la revendication 1,
dans laquelle l'unité de surveillance (90) est apte à surveiller la température du cylindre (41) au voisinage du second filet (435) pendant la rotation de la vis (43), et à déterminer l'état fondu du matériau de moulage sur la base des résultats de surveillance.

3. Machine de moulage par injection selon la revendication 1 ou 2,
dans laquelle l'unité de surveillance (90) est apte à surveiller une température au voisinage d'une paroi intérieure du cylindre (41) au voisinage du second filet (435) pendant la rotation de la vis (43), et à déterminer l'état fondu du matériau de moulage sur la base des résultats de surveillance.

4. Machine de moulage par injection selon l'une quelconque des revendications 1 à 3,
dans laquelle l'unité de surveillance (90) est apte à surveiller la température d'une section où le second filet (435) est formé, et à déterminer l'état fondu du matériau de moulage sur la base des résultats de surveillance.

5. Machine de moulage par injection selon l'une quelconque des revendications 1 à 4,
dans laquelle l'unité de surveillance (90) est apte à comparer la température d'une section où le second filet (435) est formé, à la température d'une section où le second filet (435) n'est pas formé, ce qui permet de déterminer par conséquent l'état fondu du matériau de moulage.

6. Machine de moulage par injection selon l'une quelconque des revendications 1 à 5,
dans laquelle l'unité de surveillance (90) est apte à émettre une alarme sur la base des résultats de détermination de l'état fondu.

7. Machine de moulage par injection selon l'une quelconque des revendications 1 à 6,
dans laquelle l'unité de surveillance (90) est apte à modifier les réglages de conditions de moulage sur la base des résultats de détermination de l'état fondu.
